# EUROPEAN PATENT APPLICATION

(11) **EP 2 056 241 A1**
(43) Date of publication of application: **06.05.2009**
(21) Application number: 08253586.5
(22) Date of filing: 31.10.2008
(51) Int. Cl.: G06Q 10/00

(54) **Electronically detectible display and monitoring system**

(30) Priority: 31.10.2007 GB 0721391; 14.07.2008 GB 0812841
(71) Applicant: Intellident Limited, Stockport SK8 3PW (GB)
(72) Inventor: Chadbourne, Andrew, Stockport SK8 3PW (GB); Sykes, Philip, Stockport SK8 3PW (GB)
(74) Representative: Exell, Jonathan Mark

(57) **Abstract**

An electronically detectible display and monitoring system are disclosed. The display (10) includes a body (30) and an electronically detectible node (20). The body (30) has a first state and a second state. The electronically detectible display includes a signal blocking member for preventing detection of the electronically detectible node (20) when the body (30) is in the first state. The monitoring system is arranged to monitor the display for the electronically detectible node.

## Description

### Field of the Invention

The present invention relates to an electronically detectible display, monitoring system and method for remote electronic monitoring of item stocks and the like.

### Background to the Invention

Maintaining stock levels within a store is a difficult and time consuming exercise. Most current stores rely on a computer-based logistics system in which the number of items shipped or sold is decremented from that known to be held in stock. Once the stock level reduces below a certain level then the item is restocked. Another alternative is for a visual inspection of stock levels by personnel. Where large numbers of different items are stocked, particularly if they are spread out in different displays across a store, this is time consuming and also error-prone. However, in the case of stores where not all stock is placed out on shelves, this is a much easier way of maintaining store front stock levels than trying to rely on a computer-based logistics system because you do not have to rely on a computer system guessing how much stock is out in the store as opposed to within a warehouse or the like.

A more recent development in this area is that of intelligent shelving systems. Such shelving systems incorporate tag readers such as radio frequency identifier (RFID) tag readers that are able to interrogate tags on articles placed on the shelves. Such systems can then be used to provide an inventory of the items held on the shelves and can be used to identify where restocking is required.

A particular problem with intelligent shelving systems is that of the expense and inconvenience of replacing the existing shelving with new shelving that includes the tag readers and also providing the necessary cabling infrastructure and the like for the tag readers to communicate with some central node. Understandably, most small to medium sized businesses are reluctant to replace shelving systems that are otherwise perfectly fit for use and these systems therefore have not been particularly popular.

### Statement of the Invention

According to an aspect of the present invention, there is provided an electronically detectible display including a body and an electronically detectible node, wherein the body has a first state and a second state, the electronically detectible display including a signal blocking member for preventing detection of the electronically detectible node when the body is in the first state.

Preferably, the electronically detectible node comprises a Radio Frequency Identification, RFID, tag. Most preferably, the electronically detectible node is a passive RFID tag.

The first state of the body may be a collapsed state in which the body is substantially collapsed and the second state of the body is a deployed state, the body being resiliently biased towards the deployed state.

The body may comprise a folded wedge in the collapsed state and a wedge in the deployed state.

The body may include an information sign arranged to be visible when the body is the second state.

The signal blocking member may comprises a signal blocking surface arranged to be positioned over and/or under the electronically detectible node when the body is in the first state and arranged to be remote of the electronically detectible node when the body is in the second state.

The surface may be is metallic, it may include a metal paint or metal foil layer and/or it may be or include a detuning material.

The body preferably includes a resiliently sprung member arranged to bias the body towards the second state.

According to another aspect of the present invention, there is provided a monitoring system comprising a detector and one or more of the above described electronically detectible displays, the detector being installable remotely of the one or more electronically detectible displays and being arranged to detect the electronically detectible node of one of the respective electronically detectible display when the body of the respective display is in its deployed state.

The monitoring system may further comprise a merchandising display including one or more surfaces for carrying merchandise, the merchandising display further comprising one or more of the electronically detectible displays.

The monitoring system may further comprise a remote data collection system, wherein the monitoring system is arranged to communicate data on detection of the electronically detectible nodes to the data collection system.

The remote data collection system may be arranged to collate data received from said monitoring system and includes an interface for providing access to at least a subset of said collated data.

### Brief Description of the Drawings

An embodiment of the present invention will now be described in detail, by way of example only, with reference to the accompanying drawings in which:
Figures 1a and 1b are perspective views of an electronically detectible display according to an embodiment of the present invention;
Figure 1c is a perspective view of an electronically detectible display according to a preferred embodiment of the present invention;
Figures 2a-2e are perspective views of the embodiment of Figures 1a, 1b and 1c when in use;
Figures 3a and 3b are schematic diagrams of monitoring systems according to embodiments of the present invention;
Figures 4a and 4b are perspective views of elements of the monitoring system of Figure 3 when in use;
Figures 5a and 6a are exploded views of electronically detectible displays according to embodiments of the present invention;
Figures 5b and 6b are, respectively, perspective views of the embodiment of Figures 5a and 6a; and,
Figures 7a and 7b are perspective views of a display stand including an embodiment of the present invention.

### Detailed Description

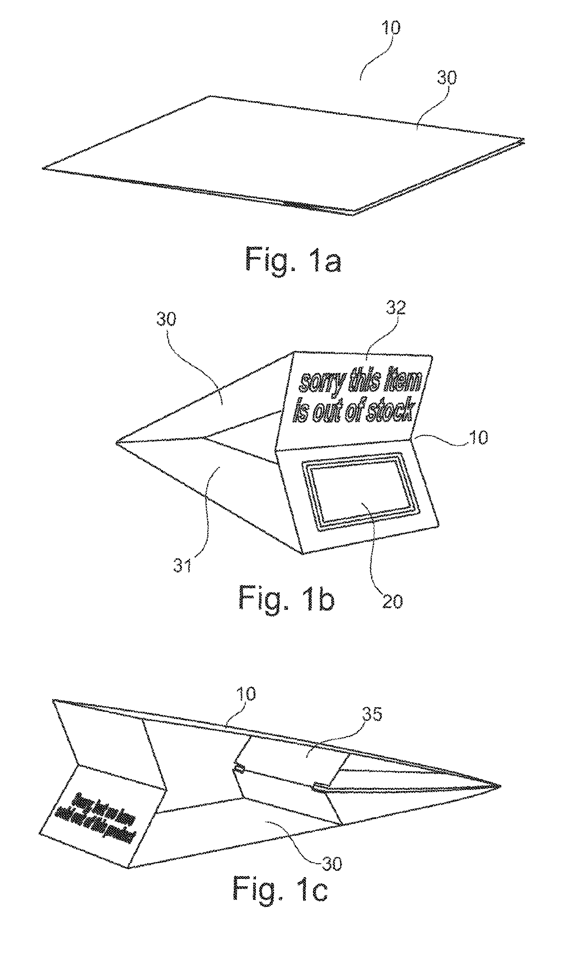

Figures 1 a and 1b are perspective views of an electronically detectible display according to an embodiment of the present invention.

Figure 1a shows an electronically detectible display 10 in a first, non-deployed state. Figure 1b shows the display 10 in a second, deployed, state.

The display 10 includes a Radio Frequency Identification (RFID) Tag 20 fixed to, or integrated within, a body 30.

The body 30 has a collapsed state (as shown in Figure 1 a) and a deployed state (as shown in Figure 1b). Whilst one or more articles of produce or the like are placed on top of the body 30, it remains in its collapsed state. However, the body 30 is resiliently biased towards its deployed state and as soon as there are no articles of produce on top of it, it returns towards the deployed state.

In the deployed state, an appropriate sign 31 such as "sorry, this item is out of stock" is visible.

Figure 1c is a perspective view of a preferred embodiment of the present invention which, in addition to the features of Figures 1 a and 1 b has as resiliently sprung member.

In the preferred embodiment of Figure 1c, the body 30 is a folding structure (made of cardboard or other low-cost material) that has a resiliently sprung member 35 which is arranged to allow it to expand when no weight is placed upon it. This expansion creates a wedge shaped sign that provides the customer with an "out of stock" message.

When items are in stock (sandwiches, drinks, etc.), they are placed on top of the body 30, forcing the wedge to collapse and conceal the "out of stock" message, however, the backing of the message contains a metallic paint or foil layer which, when compressed next to the tag (which is in the lower section of the body 30) causes the RF signals to be blocked - hence the tag will not be reported. Therefore a label that only reports it's "presence" when no objects are placed on top of it - i.e. out of stock.

The displays 10 could optionally be provided in different sizes and tensions to allow for different weights of object.

The body 30 of the display 10 will preferably need securing to the shelf to prevent movement. This could simply be via low/medium-tack double-sided tape - thus allowing it to be removed when necessary.

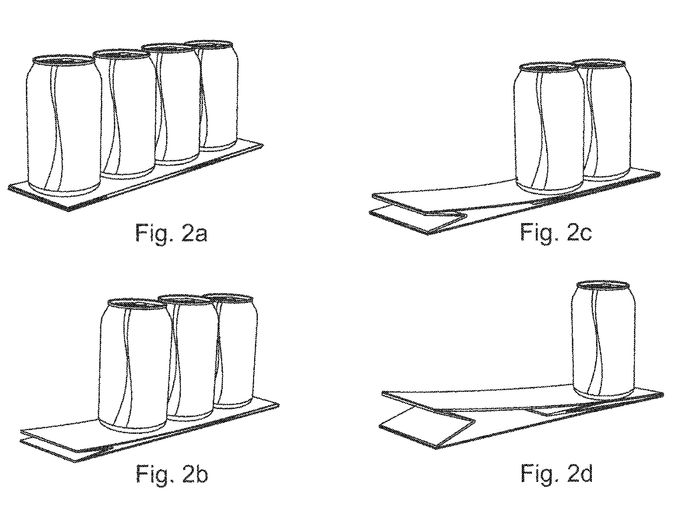

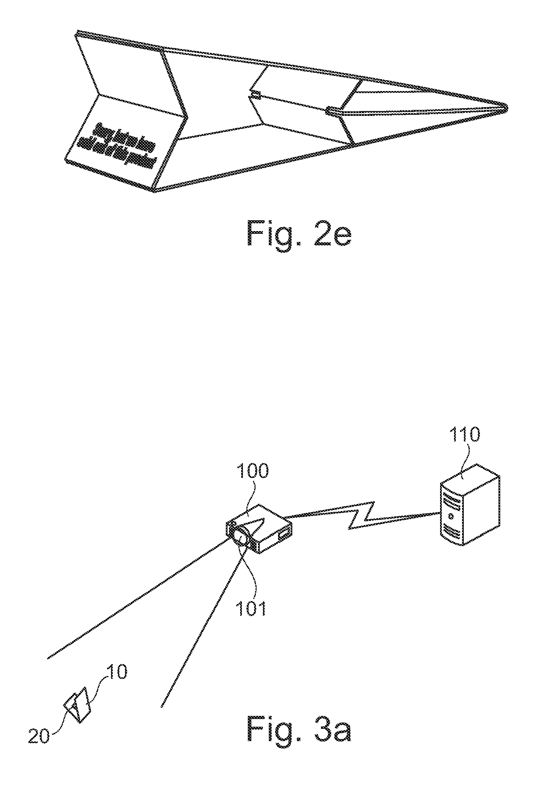

Figures 2a-2e are perspective views of the embodiment of Figures 1a, 1b and 1c when in use.

The RFID tag 20 is positioned on the body 30 such that when the body 30 is in the collapsed state, the RFID tag 20 is sandwiched between surfaces 31, 32 of the body 30. The material of the body 30 is selected such that one or more of the sandwiching surfaces 31, 32 inhibit passage of radio waves of at least the frequency used by the RFID tag 20. Alternatively, an additional layer of material such as metallic paint or a metal foil may be applied to one or more of the sandwiching surfaces 31, 32 before the RFID tag 20 is attached. In this manner, when the body 30 is in the collapsed state, the sandwiching layers 31, 32 block RF signals reaching the RFID tag 20 rendering the tag 20 substantially undetectable. Once the body 30 enters its deployed state, the sandwiching layers 31, 32 no longer block RF signals and the RFID tag 20 and the RFID tag 20 becomes detectible.

In order to keep the RFID tag as small as possible, it is preferred that it is a passive tag. As such, it needs no power source and obtains power to operate from a received signal.

The body 30 preferably includes adhesive or mounting means (not shown) on its base for adhesion or mounting to shelves or displays.

In one implementation, a simple RFID tag detector may be installed remotely from the body 30 (in the ceiling, top of a display cabinet or somewhere else) with a substantially un-obscured line of sight of the RFID tag 20 when the body 30 is in its deployed state.

Preferably, the transmission power of the detector is controlled such that it is only able to detect the body 30 when there is an un-obscured line of sight between the detector and body 30. Optionally, a number of power settings may be provided for the detector such that it is able to detect a body 30 in the presence of a limited, predetermined obstruction.

Figure 3a is a schematic diagram of a monitoring system according to an embodiment of the present invention.

The monitoring system includes one or more of the electronically detectible displays 10 discussed above, a remote detector 100 and a controller 110.

In use, the detector 100 is installed remotely of the display(s) 10. In a typical scenario, it may be ceiling-mounted, fixed to the under side of the top of a display cabinet or positioned on top of an opposite facing shelving system.

Preferably, the RFID tag 20 of the display 10 is arranged to identify itself to the detector. For example, it may modulate the received signal in a predetermined way as is known in the RFID arts.

Once an RFID tag 20 has been found by the detector and identified, the detector can communicate this information to the controller 110. The controller may be integrated within the detector 100, locally connected or remotely connected via a wired or wireless network. The controller may be (or be connected to) a stock control system or the like. Optionally, the controller may trigger an alert to a restocking terminal to prompt a member of staff to restock the particular articles associated with the body.

The detector 100 preferably includes a mount for mounting the detector remotely of the surface to be monitored and also includes a controllable antenna 101. Preferably, the antenna 101 is controllable both in relation to transmission power and direction of signal transmission.

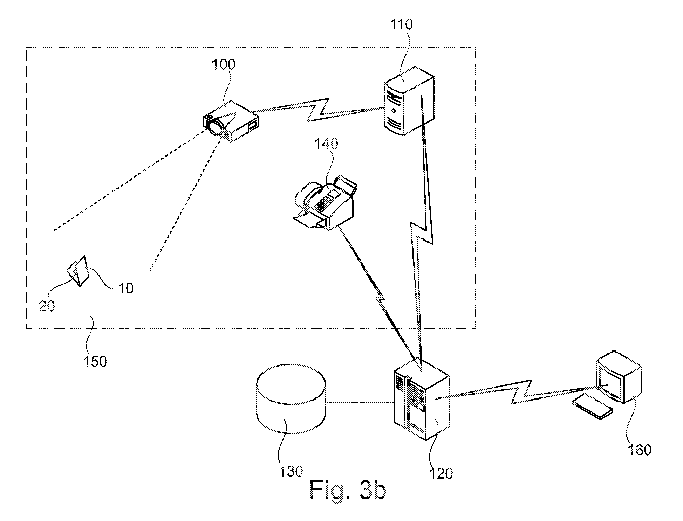

Figure 3b is a schematic diagram of a preferred embodiment of the present invention. In this embodiment, the controller 110 is arranged to communicate collected data to a data collection system 120. A controller (or a group of controllers is designated as a site 150.

The data collection system 120 includes a data repository 130 and is arranged to communicate with a restocking system 140 associated with the location of the detector 100 and displays 10. It will be appreciated that controllers 110 at multiple different sites 150 will supply collected data to the data collection system 120.

Upon receipt of collected data from a controller 110, the data collection system 120 updates a data record in the repository 130 associated with the respective display 10, controller 110 and/or its associated site 150. If the data record indicates that a predetermined threshold has been met (for example, an item is out of stock or has reached a minimum stocking level), a communication is sent to the restocking system 140 to trigger the necessary action to be taken. Optionally, a certain threshold may be set that causes re-ordering of a particular article for the site 150. The threshold in this case would be selected in order to ensure the new stock arrived before stock ran out.

In addition to maintaining a data record and providing restocking triggers, the data collection system is also arranged to collate received collected data. There are many ways in which the data could be collated. For example, data on particular articles may be collated to show sales in a particular site or set of sites 140. In this manner, if the same article was placed in a number of places throughout the store, a site could obtain data from the data collection system showing which positions were used most frequently. Similarly, a regional manager could see performance of sites broken down by product, product type, times of most activity etc. A further option would be to anonymise the collated data and to offer it for sale to show sale of general (or specific) product type by region, busiest shop times in an area etc. It will be appreciated that all manner of marketing and analysis data could be obtained.

Preferably, the data collection system 120 is arranged to communicate with a remote site 160 (via the web or some other user interface) to communicate the collated data.

In such an arrangement, the installation and/or operation of the system at the site 150 could be subsidized by sales of the collated data from the data collection system 120.

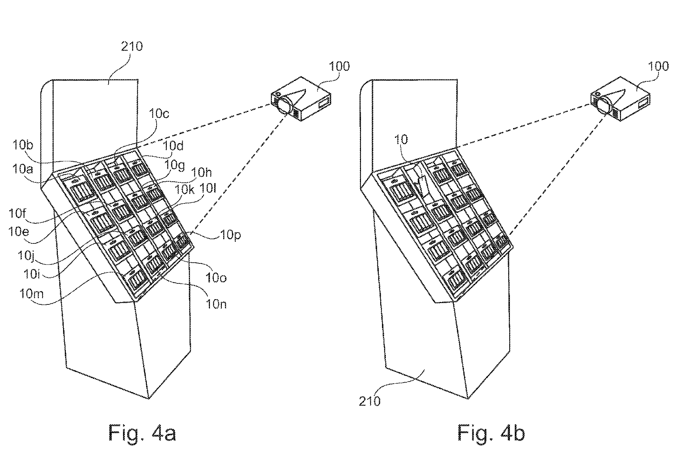

In use, the detector 100 is installed remotely of the displays 10 to be monitored. In the example of Figure 4a, a display 10a-10p is positioned in the base of each of a number of bins 200 of a display stand 210.

Figure 4a shows a fully loaded display stand 210 in which none of the identification nodes 10a-p can be detected by the detector 100 whilst Figure 2b shows the situation where some of the articles 220 have been removed and identification nodes 10b and 10k can be detected.

Preferably, the identification nodes are arranged to identify themselves to the detector 20. For example, they may modulate the received signal in a predetermined way as is known in the RFID arts.

The identification nodes 30 are adhered or otherwise mounted to existing shelves. The shelves can then be loaded with articles. The identification nodes may be positioned beneath the articles loaded onto the shelves or behind the articles. Obviously, in most circumstances the identification node should only be detected when no articles are present on the shelves. Thus, if the articles are stacked one on top of each other then the identification nodes can be placed beneath the articles. However, if the articles are placed one in front of each other on the shelves then the identification node would need to be placed behind them such that it was only un-obscured and in the line of sight of the detector 100 when all of the articles have been removed. As indicated above, the power of the detector 100 may be controllable such that it can detect an identification node in the presence of a limited amount of obstruction (such as a predetermined number of stacked or interposed articles in the line of sight).

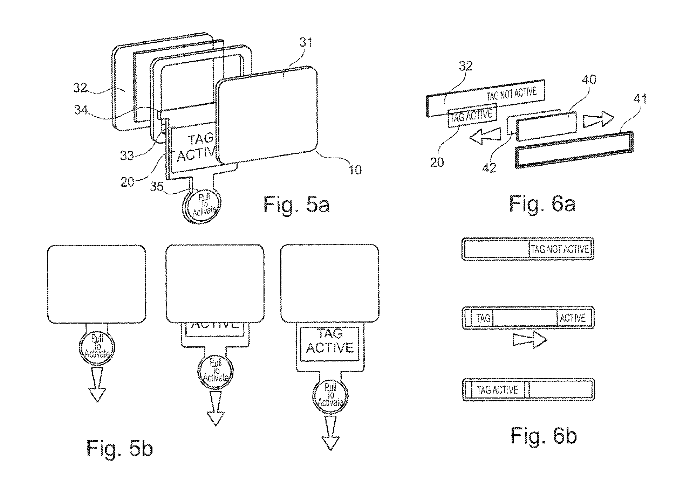

Figure 5a is an exploded view of an electronically detectible display according to another embodiment of the present invention. Figure 5b is an illustration of the embodiment of Figure 5a in use.

In the embodiment of Figure 5a and 5b, an RFID tag 20 mounted on a tag plate 33 which is sandwiched between a front surface 31 and a rear surface 32 of a body 30. The tag plate 33 includes a retaining stop 34 and a pull tab 35. In use, the tag plate 33 can be pulled out from the sandwiching surfaces 31 and 32 by manual force using the tab 35 so as to expose the tag 20. The retaining stop 34 prevents the plate 33 from being pulled completely from the display 10. An appropriate message can be adhered or otherwise printed on the plate 33. A detuning material is either integrated into the front surface 31 or otherwise adhered or secured to the front surface to block radiation to the tag 20 when it is within the sandwiching surfaces.

Figure 6a is an exploded view of an electronically detectible display according to another embodiment of the present invention. Figure 6b is an illustration of the embodiment of Figure 6a in use.

In the embodiment of Figure 6a and 6b, an RFID tag 20 mounted on a rear surface 32 of a display 10. A front member 40 is arranged to slide along the length (or height) of the rear surface 32 and is secured in place by a retaining plate 41. A detuning material 42 is either integrated into the front member 40 or otherwise adhered or secured to the front member 40 to block radiation to the tag 20 when the front member is slid over the tag 20. One or more appropriate messages can be adhered or otherwise printed on the front member 40 and/or rear surface 32.

It will be appreciated that other display mechanisms could also be used in embodiments of the present invention. For example, gravity fed displays for drinks, spice jars and the like could include a display that expands with the assistance of gravity when none or only a limited number of articles remain. Similarly, displays could be integrated into shelf-ready packaging or so-called "outers" (self-contained article stands and displays ranging from shelf based packages to standalone stands such as the type illustrated in Figure 4a and 4b).

In other embodiments, displays could include mechanical or elastomeric resilient springs to assist in expanding the display into a deployed state. Such an arrangement could be used on display pegs where multiple articles are hung on a wall for manual selection by a shopper.

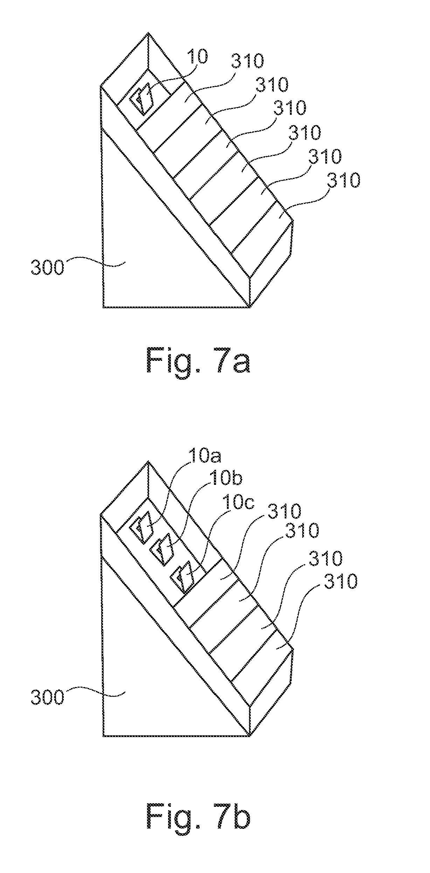

In yet further embodiments, a number of displays 10 may be applied or integrated within a single stand 300 such that each tag is detected as stocking levels change. One such embodiment is illustrated in Figures 7a and 7b. In the illustrated embodiment, articles 310 are removed from a stand 300. As articles are removed, displays 10a-10c are uncovered revert to their deployed shape such that its RFID tag 20 can be detected.

Although displays have been discussed purely with reference to RFID tags, it will be appreciated that other technologies are equally applicable. Similarly, although only displays that are adhered or otherwise mounted to shelves or the backs of shelving systems have been discussed, it will be appreciated that such displays could be integrated within article merchandising. The article merchandising need not be in the form of shelving, it could be any structure capable of retaining one or more articles.

Low cost detectors are preferably placed in the ceiling diagonally opposite the shelf or display to collect data from tags that are able to transmit. Each tag is preferably programmed with information that can be used to identify about what product should be on top of it.

Using this concept, a whole range of shelves could be equipped for stock-out notifications at very low cost.

Data reported from the display can be fed to the external systems for processing and collating or to existing in store systems.

Out of stock notifications obviously allow staff to quickly replenish items once sold, however, collating the notifications will provide a valuable set of marketing data to retailers on the buying habits of their customers, and therefore aid in their servicing, production, targeted-marketing, etc.

The system is so low-cost that retailers could easily afford one system per store. In one implementation, the system is installed at little or no charge to the retailer and data is reported to a central processing system that can provide the marketing data discussed above at a premium charge to customers.

Combining this system with other systems such as video based people counter could allow provision of a range of statistical reports for each store.

It will be appreciated that although the above embodiments have been described with respect to commercial vending environments, they could be equally applied in any environment including domestic and industrial environments.

## Claims

1. An electronically detectible display including a body and an electronically detectible node, wherein the body has a first state and a second state, the electronically detectible display including a signal blocking member for preventing detection of the electronically detectible node when the body is in the first state.

2. An electronically detectible display as claimed in claim 1, wherein the electronically detectible node comprises a Radio Frequency Identification, RFID, tag.

3. An electronically detectible display according to claim 2, wherein the electronically detectible node is a passive RFID tag.

4. An electronically detectible display as claimed in any preceding claim, wherein the first state of the body is a collapsed state in which the body is substantially collapsed and the second state of the body is a deployed state, the body being resiliently biased towards the deployed state.

5. An electronically detectible display according to claim 4, wherein the body comprises a folded wedge in the collapsed state and a wedge in the deployed state.

6. An electronically detectible display according to any preceding claim, wherein the body includes an information sign arranged to be visible when the body is the second state.

7. An electronically detectible display according to any preceding claim, wherein the signal blocking member comprises a signal blocking surface arranged to be positioned over and/or under the electronically detectible node when the body is in the first state and arranged to be remote of the electronically detectible node when the body is in the second state.

8. An electronically detectible display according to claim 7, wherein the surface is metallic.

9. An electronically detectible display according to claim 8, wherein the surface includes a metal paint or metal foil layer.

10. An electronically detectible display according to claim 7, 8 or 9, wherein the surface includes a detuning material.

11. An electronically detectible display according to any preceding claim, wherein the body includes a resiliently sprung member arranged to bias the body towards the second state.

12. A monitoring system comprising a detector and one or more electronically detectible displays as claimed in any preceding claim, the detector being installable remotely of the one or more electronically detectible displays and being arranged to detect the electronically detectible node of one of the respective electronically detectible display when the body of the respective display is in its deployed state.

13. A monitoring system as claimed in claim 12, further comprising a merchandising display including one or more surfaces for carrying merchandise, the merchandising display further comprising one or more of the electronically detectible displays.

14. A monitoring system as claimed in claim 12 or 13, further comprising a remote data collection system, wherein the monitoring system is arranged to communicate data on detection of the electronically detectible nodes to the data collection system.

15. A monitoring system as claimed in claim 14, wherein the remote data collection system is arranged to collate data received from said monitoring system and includes an interface for providing access to at least a subset of said collated data.
